# EUROPEAN PATENT SPECIFICATION

(11) **EP 2 506 279 B1**
(45) Date of publication and mention of the grant of the patent: **23.03.2016**
(21) Application number: 12162182.5
(22) Date of filing: 29.03.2012
(51) Int. Cl.: H01H 27/00

(54) **Anti-tamper cam system**
Manipulationssicheres Nockensystem
Système de came anti-sabotage

(30) Priority: 01.04.2011 GB 201105575
(43) Date of publication of application: 03.10.2012
(73) Proprietor: Idem Safety Switches Limited, Wigan WN2 4HR (GB)
(72) Inventor: Faridfar, Hamed, Manchester, Lancashire M46 0BU (GB); Mohtasham, Medi, Astley, Lancashire M29 7ET (GB)
(74) Representative: Wilson Gunn

(56) References cited:
- EP-A1- 0 755 063
- EP-A2- 0 933 794
- WO-A1-93/24947
- DE-C1- 4 338 910

## Description

The present invention relates to a cam system used to selectively activate a switch and in particular, but not exclusively, switches in the form of safety interlock switches.

Safety interlock switches are usually mounted adjacent a guard door on a machine and only enable the guard door to be opened enabling access to the machine when the machine is stationary. The switch has normally closed contacts which enable power to be supplied to the machine. In order to switch the power off to stop the machine and release the lock on the door it is necessary to activate the switch to open the normally closed contacts. Activation of the switch is achieved by reciprocal movement of a spring biased cam plunger in to or out of the switch housing to open or close the contacts.

The cam plunger is displaced by the rotation of a cam, which is rotated by removal or insertion of an actuation key into the cam housing to engage in a profile on the cam. Generally the machine cannot be restarted until the key is installed in the cam mechanism, whilst removal of the key forces the normally closed contacts to open to stop the machine.

One of the drawbacks of the known cam mechanism is that it is relatively easy to rotate and it is therefore possible for the mechanism to be tampered with by insertion of an activator to directly rotate the cam. It is the object of the present invention, to alleviate this drawback. It is a further object to provide an improved cam mechanism whose cam will only be rotated when a specific, authorised activator key is inserted.

Locks are know from EP 0933794 and DE 4338910 each having the precharacterising features of claim 1.

In accordance with the present invention there is provided a cam system used to selectively activate a switch by movement of a cam plunger between a first and second position, the plunger being moved between said first and second position by rotation of a cam between a corresponding first and second position of the cam, wherein the cam system comprises said cam, a locking system for locking said cam in said first cam position and a release system for unblocking the locking system enabling the cam to rotate to said second position, wherein the locking system comprises a separate mechanical lock on each side of the cam which must be unlocked by the release means before the cam can be rotated to the second position of the cam, each mechanical lock comprises two separate components which must be released in sequence to enable the unlocking of the cam, the two separate components comprising at least one lock release and at least one locking arm, the lock release having means to receive the release system and an abutment means to move the locking arm after it is released, the cam comprising a locking recess on its profile and the locking arm an arm portion which releasably engages in the locking recess, the locking arm being mounted separate from the lock releases.

The release means may be adapted to release the mechanical locks simultaneously.

The locking arm may be spring loaded.

In a preferred embodiment the cam is mounted for selective rotation on a cam pin, wherein the or each lock release is also mounted on the cam pin and is rotatable about the cam pin when the release means engages it.

At least two lock releases may be provided on each side of the cam each having corresponding abutment means to selectively rotate the lock releases together. The means to receive the release system may be orientated at different angles, the angle may be 90°. The cam system may have means to return the cam to its initial position upon removal of the release means. The return means may comprise a return spring which acts on at least one of the lock releases and cam. The return means may also include a stop means to limit the rotation of the cam. The stop means may comprise a slot carried on the cam or lock release and a spigot which travels in the slot on the other of the lock release or cam. The spigot and slot may be provided coaxial to the rotational axis of the cam and lock release, at least one end of the slot providing an abutment for the spigot.

The release means may comprise two separate dependent arms for respectively contacting the locking system either side of the cam. The release means may also comprise a cam mover downstream of the arms, which only contacts the cam for movement thereof once the locking means is released.

By way of example only a specific embodiment of the invention will now be described with reference to the accompanying drawings, in which:-
- **Fig. 1**: is a perspective view of a cam system constructed in accordance with the invention mounted to a safety switch;
- **Fig. 2**: is an end view of the cam housing of Fig 1 with end of cam housing removed to show cam mechanism therein;
- **Fig. 3**: is an exploded view of the cam mechanism of Fig 2;
- **Fig. 4**: is a detail of the cam of Fig 3, cam pin omitted;
- **Fig. 5**: is a perspective view of the cam housing, end removed to show the mounting of the locking arms, omitted from this illustration is the cam and its front and end lock releases;
- **Fig. 6**: is a central longitudinal sectional view of the cam housing of Fig 1 in the condition when the key activator is not inserted and the cam is prevented from rotating by the locking arms;
- **Fig. 7**: is a sectional view in a plane parallel to that of Fig 6 showing a first stage of the rotation of the cam during key activator insertion through the end of the cam housing and engagement of the activator with the end lock releases;
- **Fig. 8**: is the same section as Fig 6 but with full insertion of the activator showing its engagement with the cam;
- **Fig. 9**: is the same section as Fig 7 but showing an alternative route for insertion of the activator via the front end of the cam housing, the activator shown as being partially inserted and contacting the front lock release of the cam;
- **Fig. 10**: is similar to Fig 8 but for the front end insertion of the activator;
- **Fig. 11**: is an exploded detail of the cam and one of its end lock releases to illustrate their interaction;
- **Fig. 12**: is similar to Fig 8 but has been further sectioned to show the engagement of the end lock release in a side profile on the cam, activator partially inserted; and
- **Fig. 13**: is the same view as Fig 8, but with the activator removed.

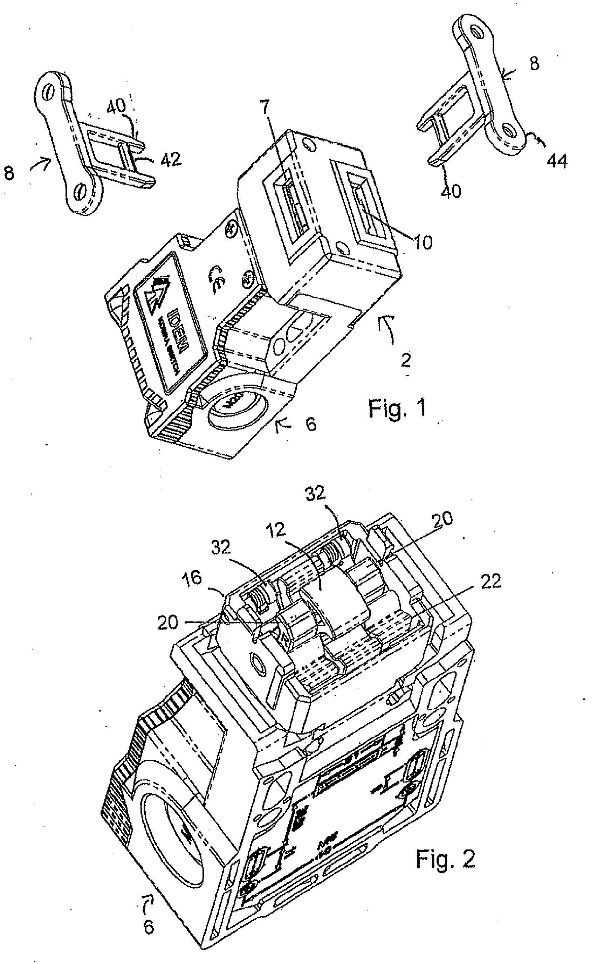

As best illustrated in Figs 1 and 2 the cam system comprises a housing 2 which contains a cam mechanism 4 which is operabley mounted to a switch 6. The cam mechanism is moved using a key actuator 8 which can be inserted via a front 7 or end 10 opening to the cam housing 2. The plurality of insertion openings 7, 10 enable the mounting of the cam system at a variety of geometric locations, whilst still enabling easy access to the operator for insertion of the key actuator by selection of the front or end insertion opening 7, 10.

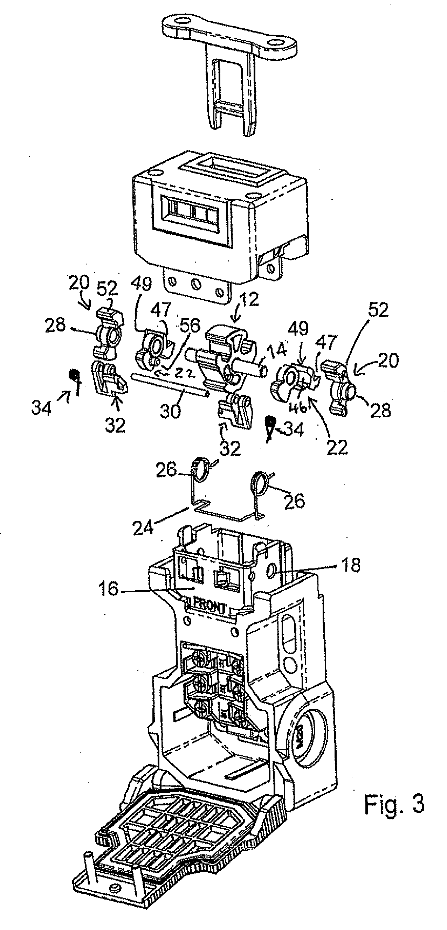

As best illustrated in Figs 2, 3 and 4 the cam mechanism 4 comprises a cam 12 rotatably mounted on a cam pin 14. The cam housing 2 comprises an inner housing 16 having a pair of concentric bores 18 through which the cam pin 14 is rigidly mounted within the inner housing 16. In addition to the cam 12 there are also selectively rotatably mounted on the cam pin 14, within the inner housing 16 a left front lock release 20 and between the left front lock release 20 and one side of the cam 12 a left end lock release 22.

A mirror image of the left front and end lock releases 20, 22 are provided on the opposite side of the cam 12, as right front and end releases 20, 22. The assembly on the cam pin 14 is completed by a cam spring 24 which has two coiled ends 26 which engage about respective annular shoulders 28 provided on each front lock release 20, remote from the cam 12, and adjacent to the inner wall of the cam inner housing 16.

In addition to the cam pin 14 a locking arm shaft 30 is also rigidly mounted in the cam inner housing 16, and parallel to the cam pin 14. This carries a pair of locking arms 32, also a mirror image of each other, one on the left and one on the right, each with a locking arm spring 34 to provide a bias to the locking arms 32.

The left and right locking arms 32 and the left and right front end lock releases 20, 22 each act to lock the cam 12 in a so-called "off" position until the various locking components are released in sequence by the insertion of the actuator key 8 in either the front or end openings 7, 10. That is when the two separate left and right sets of spring loaded rotating arms 20, 22 (each comprising the above mentioned front lock release 20 and end lock release 22) are activated by insertion of the actuator key 8 they will rotate and disengage the two separate left and right spring loaded locking arms 32 which in their normal position lock the cam 12 and prevent its rotation.

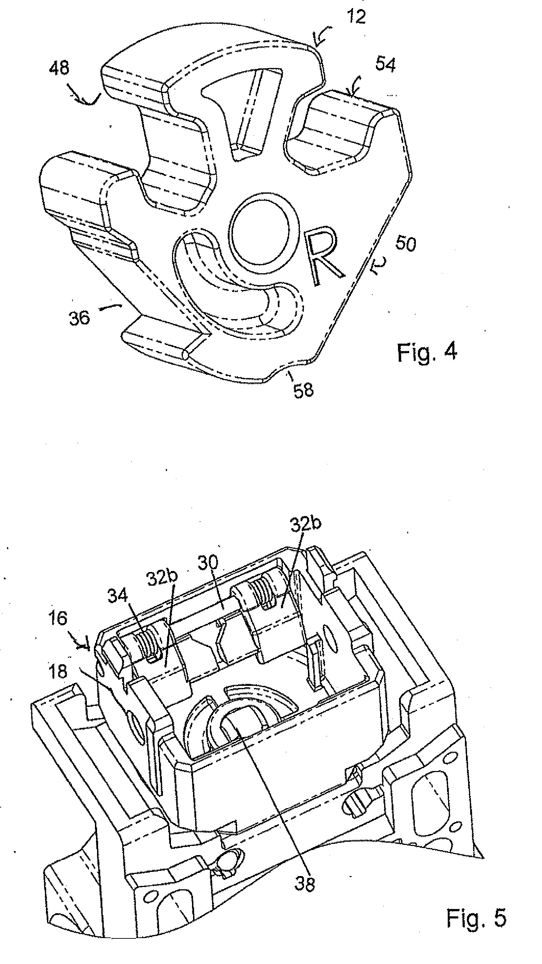

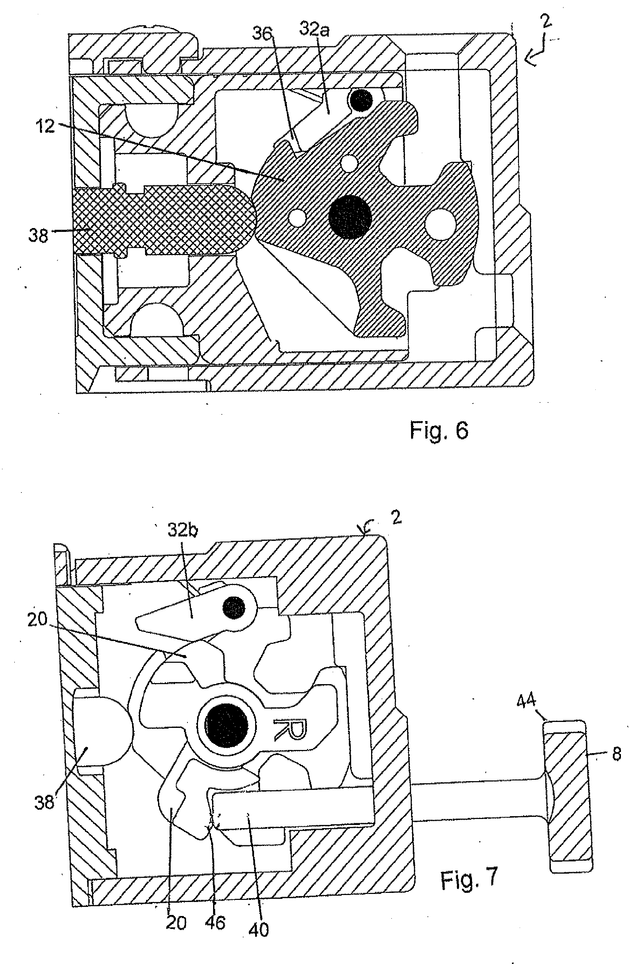

Referring to Fig 5 (in which just the locking arms 32 are illustrated within the cam housing 16 to more clearly show the structure of the locking arms 32) each locking arm comprises two arm portions, the first arm portion 32a of each arm 32 engage in the same recess 36 in the cam 12 profile (see Fig 6) and the second arm portion 32b of each arm engage a respective front and end lock release 20, 22. The two arms 32a, 32b are rigidly connected about their rotatable mounting on locking shaft arms 30.

Referring to Fig 6, when the activator key 8 is not inserted in the cam housing 2, the cam 12 is prevented from rotating by the locking arm 32a (right and left) engaging in a recess 36 on its profile about its periphery. In this position a cam plunger 38 is held by the outer profile of the cam 12 such that it extends into the switch housing 6. In this position normally closed contacts 5 in the switch are open and normally open contacts are closed and power is not supplied to attendant machinery.

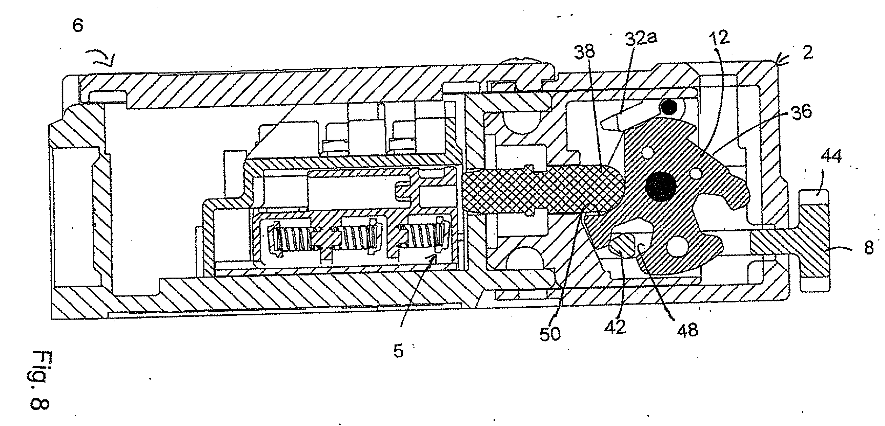

The key actuator 8 as best illustrated in Fig 1 is substantially the shape of a two pronged fork, each prong 40 (left and right) depends from a bridge 42 extending between the prongs 40 and the actuator is completed by an elongate handle 44. As mentioned above in use the actuator key 8 is inserted through opening 7, 10 in the cam housing 2 to rotate the cam 12 and to activate the switch 6. As illustrated in Figs 7 and 8 the activation of the switches requires a number of steps. In these figures the actuator key 8 is inserted via the end opening 10 and in this position as the actuator key 8 enters the cam housing 2 the left and right prongs 40 initially engage the respective left and right end lock releases 22. Each end lock release 22 comprises a first arm 46 which carries on its end a trough 47 for receipt of the respective prongs 40. The trough also extends outwardly from the lock release to provide an abutment shoulder 49. As the actuator key 8 is further inserted the end lock releases 22 are rotated about their mount on cam pin14, by the prongs 40 engagement in the trough 47 pushing the end lock releases 22 about their mounting on the cam pin 14. The rotation of the end releases 22 cause locking arms 32b, which rest thereon, to overcome their spring force and rotate with the releases 22, This forces the other portion of the locking arms 32a to lift out of their engagement in the recess 36 in the cam 12 and therefore releases the cam 12 for rotation. Further insertion of the actuator key 8 enables bridge 42 of the key 8 (as best illustrated in Fig 8) to engage in slot 48 provided in the cam's profile, this causes the cam 12 to rotate bringing a further recess 50 in its profile towards the cam plunger 38. The spring force biasing the cam plunger out of the switch housing 6 allows the cam plunger to move out of the switch housing 6 into the cam profile to engage in its recess 50.

This enables normally closed contacts in the switch to close and normal open contacts to open and power to be restored to the machine.

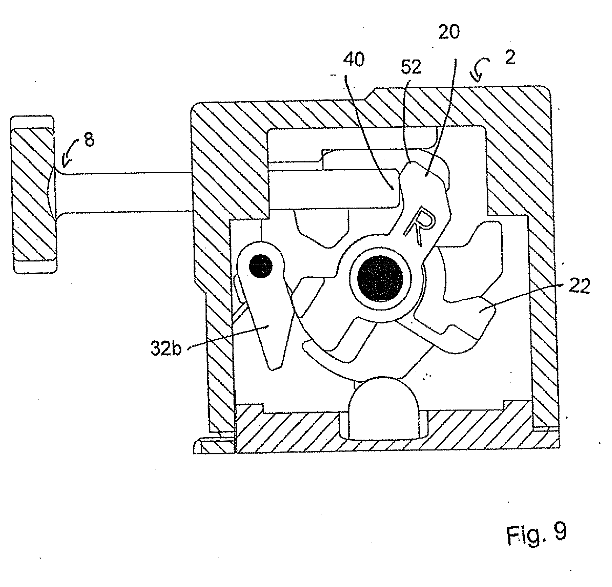

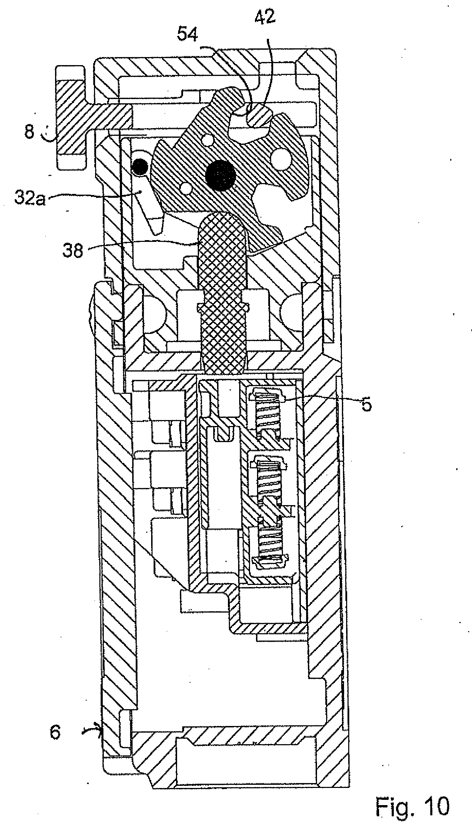

Figs 9 and 10 illustrate the release of the cam 12 for rotation during front entry through opening 7 of the cam housing of the key actuator. In this instance the left and right springs 40 engage respective left and right front lock releases 20. Each front lock release 20 carries a curved arm 52 and the respective prong 40 engages in the curved portion thereof to rotate the front lock release 20. As the front lock release arms 52 rotate they engage the abutment shoulder 49 of the end lock releases 22 and this causes the end lock releases to rotate therewith. This as before will rotate the locking arm portions 32b and cause removal of the locking arm portions 32a from the locking recess 36 in the cam 12 enabling the cam 12 to rotate when bridge portion 42 of the key actuator 8 engages in a second slot 54 provided in the cam profile during further insertion of the key actuator. This as before enables the cam plunger 38 to move out of the switch housing 6 and engage in recess 50 on the cam 12, enabling the contacts to switch and the power to be restored to the machine.

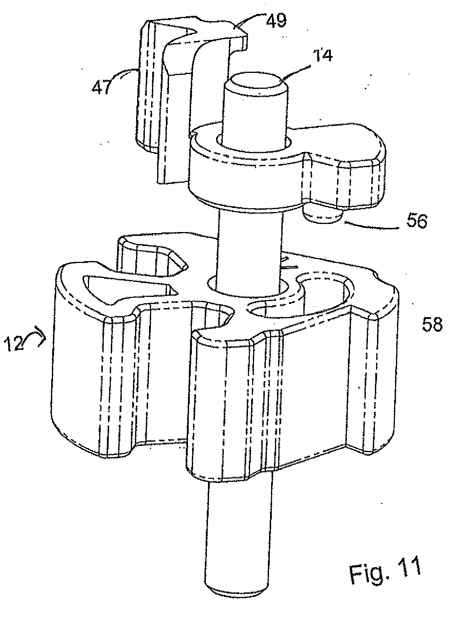

As best illustrated in Figs 11 to 13 each end lock release 22 carries a cam return spigot 56 which engages in a slot 58 provided in the side of the cam 12. The side cam slot 58 is a partial circle which is concentric with the longitudinal axis of the cam pin 14. A slot 58 is provided on each side of the cam 12 for receipt of a respective spigot 56 of the left and right end locks 22. This ensures that after withdrawal of the actuator 8 the position of the cam 12 is correct to ensure that the cam 12 is in the correct position to be locked by the locking arms 32.

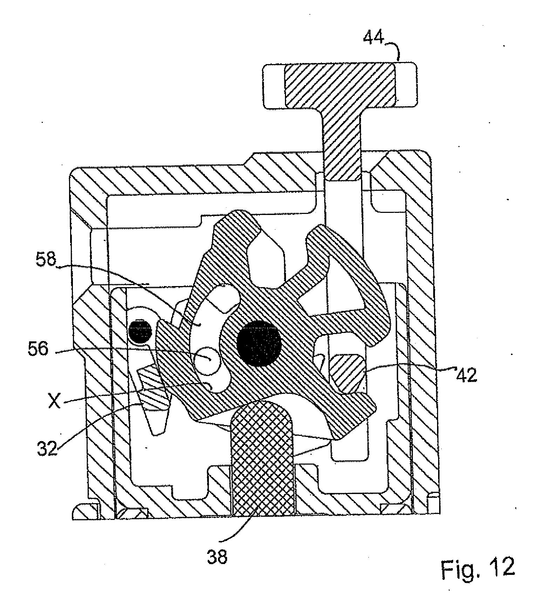

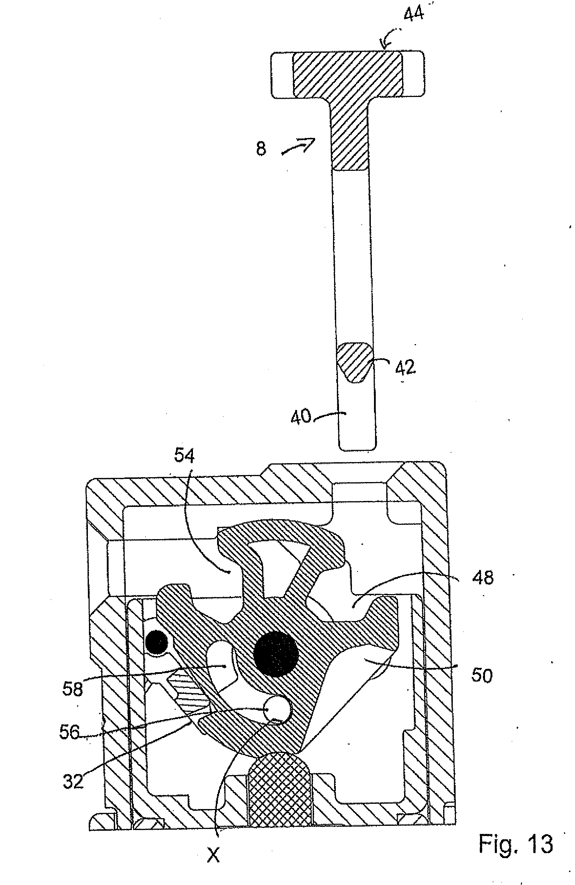

As best illustrated in Fig 12 (although described with respect to end entry of the actuator key, it is to be understood that the same principal will apply to front entry), during insertion of the actuator 8 the end lock release 22 rotates first causing the spigot 56 to move away from an abutment position X on one end of the slot 58. The spigot 56 during rotation no longer abuts the cam and the cam is free to rotate, with the spigot moving along the slot 58. When the actuator is withdrawn (Fig 13), the actuator no longer presses on the end lock release 22 and because it is spring loaded 24, 26 it rotates back to its starting position. This causes its spigot 56 to move back along the slot 58 to once again abut the cam 12 at abutment position X at the end of the slot 58. The position X is located to ensure that the cam is moved by the spigot 56 to its correct position for engagement with the spring loaded locking arms 32 which engage in recess 36 on the cam profile.

It is to be understood that the invention is not intended to be restricted to the details of the above embodiment which are described by way of example only.

## Claims

1. A cam system (2) used to selectively activate a switch (6) by movement of a cam plunger (38) between a first and second position, the plunger being moved by rotation of a cam (12) between a corresponding first and second position of the cam (12), wherein the cam system (2) comprises a cam (12), a locking system (20,22; 32a, 32b) for locking said cam (12) in a first cam position and a release system (8) for unlocking the locking system (20,22; 32) enabling the cam (12) to rotate to a second position, wherein the locking system (20,22; 32) comprises a separate mechanical lock on each side of the cam (12) which must be unlocked by the release means (8) before the cam (12) can be rotated to the second position of the cam (12), **characterised in that** each mechanical lock (20,22; 32) comprises two separate components which must be released in sequence to enable the unlocking of the cam (12), the two separate components comprising at least one lock release (20,22) and at least one locking arm (32), the lock release (20,22) having means (46,47) to receive the release means (8) and an abutment means to move the locking arm (32) after it is released, wherein the cam (12) comprises a locking recess (36) on its profile and the locking arm (32) an arm portion (32a) which releasably engages in the locking recess (36), wherein the locking arm (32) is mounted separate from the at least one lock release (20,22).

2. A cam system (2) according to claim 1, wherein the release means (8) is adapted to release the mechanical locks (20,22; 32) simultaneously.

3. A cam system (2) according to claim 1 or 2, wherein the locking arm (32) is spring loaded.

4. A cam system (2) according to any one of claims 1, 2 or 3, wherein the cam (12) is mounted for selective rotation on a cam pin (14), wherein the or each lock release (20,22) is also mounted on the cam pin (14) and is rotatable about the cam pin (14) when the release means (8) engages it.

5. A cam system according to claim 4, wherein at least two lock releases (20,22) are provided on each side of the cam (12) each having complementary abutment means (49,52) to selectively rotate the lock releases (20,22) together about the cam pin (14).

6. A cam system (2) according to claim 5, wherein at least two means (47,52) to receive the release means (8) are provided and these are orientated at different angles.

7. A cam system according to claim 6, wherein the angle may be 90°.

8. A cam system according to claim 6 or 7, wherein a respective release receiving means (47,52) is mounted on each lock release (20,22) and one of the release receiving means (52) is also one of the abutment means (52).

9. A cam system according to anyone of claims 3 to 8, wherein the cam system (2) has means (24,26) to return the cam (12) to its initial position upon removal of the release means (8).

10. A cam system (2) according to claim 9, wherein the return means (24,26) comprises a return spring which acts on at least one of the lock releases (20,22) and cam (12), the return means including a stop means (56,58) to limit the rotation of the cam (12).

11. A cam system according to claim 10, wherein the stop means comprises a slot (58) carried on the cam (12) or lock release (32) and a spigot (56) which travels in the slot (58) on the other of the lock release (20,22) or cam (12), the spigot (56) and slot (58) being provided coaxial to the rotational axis of the cam (12) and lock release (32), at least one end of the slot (58) providing an abutment for the spigot (56).

12. A cam system (2) according to any one of the preceding claims, wherein the release means (8) comprises two separate dependent arms (40) for respectively contacting the locking system (20,22,32) either side of the cam (12), the release means (8) also comprising a cam mover (42) downstream of the arms (40) adapted to contact the cam (12) for movement thereof after the release of locking means (20,22,32).

## Patentansprüche

1. Nockensystem (2), welches verwendet wird, einen Schalter (6) durch Bewegung eines Nockenstößels (38) zwischen einer ersten und zweiten Position selektiv zu aktivieren, wobei der Stößel durch Drehung eines Nocken (12) zwischen einer entsprechenden ersten und zweiten Position des Nocken (12) bewegt wird, wobei das Nockensystem (2) einen Nocken (12), ein Sperrsystem (20, 22; 32a, 32b) zum Sperren des Nocken (12) in einer ersten Nockenposition und ein Freigabesystem (8) zum Entsperren des Sperrsystems (20, 22; 32) aufweist, welches dem Nocken (12) ermöglicht, in eine zweite Position zu drehen, wobei das Sperrsystem (20, 22; 32) eine separate mechanische Sperre auf jeder Seite des Nocken (12) aufweist, welche durch das Freigabemittel (8) entsperrt werden muss, bevor der Nocken (12) in die zweite Position des Nocken (12) gedreht werden kann,
**dadurch gekennzeichnet,**
**dass** jede mechanische Sperre (20, 22; 32) zwei separate Komponenten aufweist, welche nacheinander freigegeben werden müssen, um das Entsperren des Nocken (12) zu ermöglichen, wobei die zwei separaten Komponenten mindestens eine Sperrfreigabe (20, 22) und mindestens einen Sperrarm (32) aufweisen, wobei die Sperrfreigabe (20, 22) Mittel (46, 47) hat, um das Freigabemittel (8) zu empfangen, und ein Anschlagsmittel hat, um den Sperrarm (32), nachdem er freigegeben wurde, zu bewegen, wobei der Nocken (12) eine Sperraussparung (36) in seinem Profil aufweist und der Sperrarm (32) einen Armbereich (32a) aufweist, welcher freigebbar in die Sperraussparung (36) eingreift, wobei der Sperrarm (32) separat von der mindestens einen Sperrfreigabe (20, 22) angebracht ist.

2. Nockensystem (2) nach Anspruch 1, wobei das Freigabemittel (8) ausgebildet ist, die mechanischen Sperren (20, 22; 32) gleichzeitig freizugeben.

3. Nockensystem (2) nach Anspruch 1 oder 2, wobei der Sperrarm (32) federbelastet ist.

4. Nockensystem (2) nach einem der Ansprüche 1, 2 oder 3, wobei der Nocken (12) zum selektiven Drehen auf einem Nockenbolzen (14) angebracht ist, wobei die oder jede Sperrfreigabe (20, 22) auch auf dem Nockenbolzen (14) angebracht ist und um den Nockenbolzen (14) drehbar ist, wenn das Freigabemittel (8) mit ihr im Eingriff ist.

5. Nockensystem nach Anspruch 4, wobei mindestens zwei Sperrfreigaben (20, 22) auf jeder Seite des Nocken (12) vorgesehen sind, welche jeweils komplementäre Anschlagsmittel (49, 52) haben, um die Sperrfreigaben (20, 22) gemeinsam um den Nockenbolzen (14) selektiv zu drehen.

6. Nockensystem (2) nach Anspruch 5, wobei mindestens zwei Mittel (47, 52) vorgesehen sind, um das Freigabemittel (8) zu empfangen und diese in verschiedenen Winkeln orientiert sind.

7. Nockensystem nach Anspruch 6, wobei der Winkel 90° sein kann.

8. Nockensystem nach Anspruch 6 oder 7, wobei ein entsprechendes Freigabeempfangsmittel (47, 52) auf jeder Sperrfreigabe (20, 22) angebracht ist und eines der Freigabeempfangsmittel (52) auch eines der Anschlagsmittel (52) ist.

9. Nockensystem nach einem der Ansprüche 3 bis 8, wobei das Nockensystem (2) Mittel (24, 26) hat, um den Nocken (12) in seine Anfangsposition beim Entfernen des Freigabemittels (8) zurückzuführen.

10. Nockensystem (2) nach Anspruch 9, wobei das Rückführmittel (24, 26) eine Rückführfeder aufweist, welche auf mindestens eine der Sperrfreigaben (20, 22) und den Nocken (12) einwirkt, wobei das Rückführmittel ein Stoppmittel (56, 58) aufweist, um die Drehung des Nocken (12) zu begrenzen.

11. Nockensystem nach Anspruch 10, wobei das Stoppmittel eine Nut (58), welche auf dem Nocken (12) oder der Sperrfreigabe (32) geführt ist, und einen Zapfen (56) auf dem anderen der Sperrfreigabe (20, 22) oder dem Nocken (12) aufweist, welcher in der Nut (58) läuft, wobei der Zapfen (56) und die Nut (58) koaxial zu der Drehachse des Nocken (12) und der Sperrfreigabe (32) vorgesehen sind, wobei mindestens ein Ende der Nut (58) einen Anschlag für den Zapfen (56) bereitstellt.

12. Nockensystem (2) nach einem der vorherigen Ansprüche, wobei das Freigabemittel (8) zwei separate abhängige Arme (40) zum entsprechenden Kontaktieren des Sperrsystems (20, 22, 32) beidseitig des Nocken (12) aufweist, wobei das Freigabemittel (8) auch einen Nockenbeweger (42) abwärts des Arms (40) aufweist, welcher ausgebildet ist, den Nocken (12) zu dessen Bewegung nach der Freigabe der Sperrmittel (20, 22, 32) zu kontaktieren.

## Revendications

1. Système de came (2) utilisé pour activer sélectivement un commutateur (6) par le mouvement d'un piston plongeur de came (38) entre une première et une seconde position, le piston plongeur étant déplacé par la rotation d'une came (12) entre des première et seconde positions correspondantes de la came (12), dans lequel le système de came (2) comprend une came (12), un système de verrouillage (20, 22 ; 32a, 32b) pour verrouiller ladite came (12) dans une première position de came et un système de libération (8) pour déverrouiller le système de verrouillage (20, 22 ; 32) permettant à la came (12) de tourner dans une seconde position, dans lequel le système de verrouillage (20, 22 ; 32) comprend un loquet mécanique séparé de chaque côté de la came (12) qui doit être déverrouillé par le moyen de libération (8) avant que la came (12) ne puisse être entraînée en rotation dans la seconde position de la came (12), **caractérisé en ce que** chaque loquet mécanique (20, 22 ; 32) comprend deux composants séparés qui doivent être libérés en séquence pour permettre le déverrouillage de la came (12), les deux composants séparés comprenant au moins un moyen de déverrouillage (20, 22) et au moins un bras de verrouillage (32), le moyen de déverrouillage (20, 22) ayant des moyens (46, 47) pour recevoir le moyen de libération (8) et un moyen de butée pour déplacer le bras de verrouillage (32) après qu'il a été libéré, dans lequel la came (12) comprend un évidement de verrouillage (36) sur son profil et le bras de verrouillage (32), une partie de bras (32a) qui se met en prise de manière amovible dans l'évidement de verrouillage (36), dans lequel le bras de verrouillage (32) est monté séparément du au moins un déblocage du loquet (20, 22).

2. Système de came (2) selon la revendication 1, dans lequel le moyen de libération (8) est adapté pour libérer les loquets mécaniques (20, 22 ; 32) simultanément.

3. Système de came (2) selon la revendication 1 ou 2, dans lequel le bras de verrouillage (32) est à ressort.

4. Système de came (2) selon l'une quelconque des revendications 1, 2 ou 3, dans lequel la came (12) est montée pour la rotation sélective sur une broche de came (14), dans lequel le ou chaque moyen de déverrouillage (20, 22) est également monté sur la broche de came (14) et peut tourner autour de la broche de came (14) lorsque le moyen de libération (8) la met en prise.

5. Système de came selon la revendication 4, dans lequel au moins deux moyen de déverrouillage (20, 22) sont prévus de chaque côté de la came (12), chacun ayant des moyens de butée (49, 52) complémentaires pour faire tourner sélectivement les déblocages de loquet (20, 22) ensemble autour de la broche de came (14).

6. Système de came (2) selon la revendication 5, dans lequel au moins deux moyens (47, 52) pour recevoir le moyen de libération (8) sont prévus et ces derniers sont orientés à des angles différents.

7. Système de came selon la revendication 6, dans lequel l'angle peut être de 90°.

8. Système de came selon la revendication 6 ou 7, dans lequel un moyen de réception de libération (47, 52) respectif est monté sur chaque moyen de déverrouillage (20, 22) et l'un des moyens de réception de libération (52) est également l'un des moyens de butée (52).

9. Système de came selon l'une quelconque des revendications 3 à 8, dans lequel le système de came (2) a des moyens (24, 26) pour ramener la came (12) dans sa position initiale suite au retrait du moyen de libération (8).

10. Système de came (2) selon la revendication 9, dans lequel le moyen de rappel (24, 26) comprend un ressort de rappel qui agit sur au moins l'un des déblocages de loquet (20, 22) et la came (12), le moyen de rappel comprenant un moyen d'arrêt (56, 58) pour limiter la rotation de la came (12).

11. Système de came selon la revendication 10, dans lequel le moyen d'arrêt comprend une fente (58) portée sur la came (12) ou le moyen de déverrouillage (32) et un ergot (56) qui se déplace dans la fente (58) sur l'autre parmi le moyen de déverrouillage (20, 22) ou la came (12), l'ergot (56) et la fente (58) étant prévus de manière coaxiale par rapport à l'axe de rotation de la came (12) et du moyen de déverrouillage (32), au moins une extrémité de la fente (58) fournissant une butée pour l'ergot (56).

12. Système de came (2) selon l'une quelconque des revendications précédentes, dans lequel le moyen de libération (8) comprend deux bras dépendants séparés (40) pour mettre respectivement en contact le système de verrouillage (20, 22, 32) de chaque côté de la came (12), le moyen de libération (8) comprenant également un actionneur de came (42) en aval des bras (40) adapté pour être en contact avec la came (12) pour son mouvement après la libération des moyens de verrouillage (20, 22, 32).
